# EUROPEAN PATENT SPECIFICATION

(11) **EP 1 755 846 B1**
(45) Date of publication and mention of the grant of the patent: **05.09.2007**
(21) Application number: 05750934.1
(22) Date of filing: 03.06.2005
(51) Int. Cl.: B29B 17/00

(54) **METHOD FOR PROCESSING PLASTIC WASTE TO OBTAIN MATRIX MATERIAL; THE MATRIX MATERIAL AND THE COMPOSITE MATERIAL**
VERFAHREN ZUR VERARBEITUNG VON KUNSTSTOFFABFALL ZUM ERHALT VON MATRIXMATERIAL, DAS MATRIXMATERIAL UND DAS VERBUNDMATERIAL
PROCÉDÉ DE TRAITEMENT DE DÉCHETS DE MATIÈRE PLASTIQUE AFIN D'OBTENIR UN MATÉRIAU DE MATRICE, LE MATÉRIAU DE MATRICE ET LE MATÉRIAU COMPOSITE

(30) Priority: 07.06.2004 HU 0401134
(43) Date of publication of application: 28.02.2007
(73) Proprietor: Szilvassy, Mihaly, Szlatina puszta 172 2451 Ercsi (HU); Nemeth, Miklos, Fillér u. 64/b 1022 Budapest (HU)
(72) Inventor: Szilvassy, Mihaly, Szlatina puszta 172 2451 Ercsi (HU); Nemeth, Miklos, Fillér u. 64/b 1022 Budapest (HU)
(74) Representative: Pintz, György
(86) International application number: PCT/HU2005/000059
(87) International publication number: WO 2005/120790

(56) References cited:
- EP-A- 0 639 674
- EP-A- 0 720 898
- EP-A- 0 888 856
- DE-A1- 10 039 559
- GB-A- 2 165 797
- US-A- 5 624 620

## Description

The object of the invention is a method for processing plastic waste to obtain matrix product of wide-ranging use mainly from contaminated thermoplastic wastes that can not be utilized for any other purpose, and further processing of this matrix material by adding filling materials to obtain composite material of technological use, primarily building material.

Further objects of the invention are the matrix product obtained as a result of the plastic waste processing, and the composite material of technological use, primarily building materials, produced with the filling materials added. The methods according to the invention comprise no chopping step.

Disposal and recycling of plastic wastes is an unsolved problem in our days. Production and usage of plastics is continuously increasing, resulting in an increasing amount of plastic wastes as well.

Plastic wastes can be classified in three groups:
1) Technological wastes, manufacturing wastes, processing wastes.
   Usually do not get into the environment. Directly or after chopping or crushing they can be recycled into the manufacturing process.
2) Industrial wastes, further processing wastes, confectioning wastes.
   Usually produced in the course of processing and confectioning the plastic semifinished products at the place of application. They are of the homogeneous type, clean, their utilization is usually solved: they are either repurchased by the manufacturers of the semifinished products, or purchased by companies specialised in waste recycling.
3) Wastes of plastic products after they have been used, packaging materials, hollow articles, used products. This latter category of plastic wastes causes the most significant problem.

Recycling of plastic wastes placed at rubbish-shoots is an issue of key importance all over the world. The properties of plastics that are advantageous when they are used - e.g. they do not decompose due to external environmental effects, they do not become rotten, they are of low density and high specific volume - become disadvantage when they get to the rubbish-shoot. Despite of the fact that about 10 % of household rubbish is plastic, and that 1.5 % of the total rubbish placed at rubbish-shoots containing building rubbish as well is plastic, it seems to be much more, as it has high volume as compared to its mass.

Due to their special physical and chemical properties, reusing and especially recycling of plastics require novel approach.

In the frame of selective waste collection, plastics of public use of different polymer matrix are collected in one group as "plastics", irrespective of what these plastics are actually made of.

A further problem of recycling is that there may be hundreds of variants or, in case of certain volume-produced plastics, even thousands of variants within a single type of plastic. Even the recycling of plastics sorted by type may cause difficulties if they are not used for the same purpose, e.g. polyethylene used for injection moulding is not the same as polyethylene developed for pipe production or bottle-blowing. Intermingling of plastics in the course of selective waste collection further reduces their usability. It especially encumbers the recycling of wastes comprising plastics of different chemical structure.

Utilization of miscellaneous plastic wastes is a critical issue in our days. It is usually considered in our days that technical depreciation inevitably takes place in the course of recycling, and as a result, the recycled plastic can only be applied for purposes of lower standard.

Contaminated and miscellaneous wastes - according to the present state of art - can not usually be economically recycled, their utilization requires new methods. The more contaminated and miscellaneous the plastic waste to be prepared for recycling is, the more expensive the preparation is. It is especially true for the plastic content of highly miscellaneous, highly contaminated household wastes originating from consumer's packaging, even if it is coming from selective waste collection.

From another aspect, the serious problem of management and/or disposal of communal wastes is even made more difficult by plastic wastes, as due to their shape (mainly foils, foams, bags, bottles) and low specific weight they can be carried by the wind, they do not or hardly decay in a biological way, and they increase the cubic content of rubbish. Disposal of these plastic wastes and especially the compression thereof is of primary interest in itself, however, it is especially advantageous if they can be used for producing useful products that can substitute for other materials of technological use, especially wood, that can only be obtained from the nature.

The object of the present invention with the methods according to the invention is:
a) to produce matrix material from useless plastic waste, which is useful in itself and can also be further processed,
b) to apply a further step to produce technologically useful composite material that can preferably substitute for building materials and wood, and this way
c) to remove material of low specific weight and high cubic content from the wastes.

As regards the final products of the method, we differentiate between the pure material (free of additives), which is referred to as matrix material so as to make a distinction, and the material containing filling materials, which is obtained from the pure matrix material by adding filling materials, this is referred to as composite material.

Composite materials comprising thermoplastics and filling materials have been prepared and used for decades, however, in the traditional processing equipments it is a requirement that the plastics to be processed must be clean. Therefore with these methods one can process either new thermoplastics or plastics obtained from accurate selective waste collection after thorough separation and cleaning. In Hungary it is only about 15 % of the plastic wastes that can be collected for reprocessing via selective waste collection and industrial recycling in our days. And even of this 15 % only the cleanest, most valuable part is recycled, the remainder is placed embaled at the rubbish-shoots, increasing the pollution of the environment. In lack of appropriate processing technology, in spite of the well-founded social demand, primarily due to lack of money, there is not even that much hope for the processing of the remaining 85 % and the utilisation of its plastic content.

In the course of the traditional methods, the first step of processing the plastic wastes to be utilized is selecting and chopping. Besides the significant energy consumption of chopping there are technical difficulties as well. Foils may slip near the knives, and even the smallest metal pieces may cause the blades to break or damage the entire machine, while fibrous plastics (cords) may roll onto the shafts of rotating parts. Therefore it is the step of chopping that should be avoided as a first step of processing of contaminated heterogeneous plastics.

As the second step of traditional methods the chopped waste "crushing" (which, as we have mentioned, can primarily be gained from expensive and accurately selected, relatively clean base material, with difficulties and high energy consumption) is homogenized while it is heated in a mixing process, in certain cases with filling materials added, than this material is injection moulded or extruded to obtain its final form in a shaping tool.

The matrix material thus obtained or the composite material obtained with the filling materials added easily breaks into its components upon mechanical stress, so its applicability is quite limited. These methods are in fact suitable for compression of certain plastic wastes, however, the other object, the production of useful material substituting for natural material is not satisfactorily solved. Therefore there is a need for a novel method that performs the above described functions significantly cheaper and more effective.

Several other methods have been suggested to solve the problem, which is proven by the large number of patents registered in this technical field. However, these patents do not imply the method according to the present invention. There is not even one patent that had close relation to our solution. However, we still mention three patents that have shallow resemblance to our method.

According to the method of the Canadian patent No. CA 2365772 (Barcheno Juan Carlos) the plastic waste is processed without separation and washing. The plastic wastes are processed in a bladed mill with simultaneous heating at a temperature of maximum 300 °C, than the mass is extruded.

USA patent No. US 5746958 (TREX Company) presents a method where a mixture of wood waste and thermoplastic waste is produced, this mixture is pelleted afterwards, and the pelleted mixture as a base material can be then used for several purposes. Both the wood waste and the plastic waste is crushed into small pieces, and the pelleting also takes place in a mill.

USA patent No. US 5851469 (TREX Company) presents a method where a mixture of heated plastic mass and wood grinds is produced, and this is pressed hot through an extrusion hole, then the strip-like material is allowed to stand, treated and cooled. This method requires that the plastics should be carefully selected based on their melting point, with an upper limit of 150°C. The raw material is thermoplastic melted without chopping.

Documents DE 1003959 A and EP0720898 B disclose further methods of recycling communal and industrial waste.

The above mentioned patent descriptions include certain steps of the method according to our invention, however, they also include steps that are actually to be eliminated by our invention, and not even the combination of the methods according to the invention can be found in the closest prior arts. The special purpose equipment of the first step of our invention, the recovering machine is also a novelty.

In what follows, we present the method according to our invention.

The basic material of the waste processing method is thermoplastic gained from industrial and communal wastes, which can originate from selective waste collection and from the part of the industrial wastes that can not be utilised elsewhere. The followings can be examples for the basic materials, without making any restriction:
- miscellaneous foil type materials of any thickness, painted or otherwise contaminated,
- threads, cords or other plastic fibre-like products or products made of these fibres made of any raw material, plastic fabric, e.g. the material of big-bag sacks or wastes originating from the production thereof,
- communal composite plastic waste, milk bags, bottles, polyethylene sacks etc. and other miscellaneous plastic wastes contaminated with food,
- mulch foils and strips used in agriculture, plastic bags used with mushroom growing,
- plastic bottles with paper "contamination" (bottle-labels), irrespective of what had been originally stored in it,
- plastic boxes used for transportation purposes, partition boxes, barrels, cans, irrespective of what had been originally stored in it (except for toxicants),
- sanitary towels, napkins, other miscellaneous sanitary packaging material,
- PVC sheets, drainage pipes, miscellaneous contaminated PVC wastes, building plastic wastes,
- polystyrene; housings, production wastes and insulation of electrical products.

It can be seen that the basic materials of the method are of quite various type, the only important point is that the amount of thermoplastics in the processed material should be enough for the following technological steps.

In the plastic content of industrial and communal wastes the major part is polyethylene and polypropylene, but it also contains polystyrene, different kinds of polyamides, PVC and other thermoplastic wastes as well.

If the raw material is a mixture of plastic wastes and other rubbish, it is advised to perform a primary cleaning and selection step prior to applying the method according to the invention. The purpose of this physical cleaning is to ensure safe operation of the machinery applied in the process. The method is not at all sensitive to the cleanness of the material processed, that is, there is no need for so clean basic material as it is necessary in the methods according to the prior art. The aspects of the primary cleaning step are as follows: the physical size of the contaminating material should be smaller than the feeding hole, and these contaminating materials should not damage the recovering machine. Therefore the large solid pieces must be manually removed. It may be done partly manually and partly via electromagnetic metal removal. Shakers can be applied as further primary cleaning apparatuses.

Water content of the base material is a disadvantage. It is especially disadvantageous if the water content is more than 8 % of the mass of the base material inputted. Though the water content is evaporated during the processing, the vapour may condense at other, cold parts of the equipment, which increases the processing time. Therefore it is recommended that the base material waste should be pre-heated. Pre-heating eliminates moisture, and the heat inputted in the course of pre-heating is utilized in the next step.

In order to avoid significant loss of heat, it is advantageous that the temperature of the material inputted into the recovering machine should be at least 20°C. This temperature can be more, even 50°C, however, the highest temperature must not exceed the melting temperature of the plastic waste of the lowest melting point.

The primary selected material gets into the recovering machine. The material is melted here by heating and applying pressure. This apparatus applies no rotational, cutting, drying, slicing or chopping procedure. The only moving part of the apparatus is the press. This is a continuous operation equipment. The pressure, which is required for melting the plastic waste is between 10⁴ and 3.0 x 10⁷ Pa (0.1- 300 kg/cm²), preferably 2.4 x 10⁷ Pa (240 kg/cm²). The pressure presses the material against the warm heat transferring surface, so the heat transferred by the surface can be optimally utilized. At this pressure, the heat transferred by the heat transferring surfaces is enough for the recovering and melting of the miscellaneous plastic waste. The effective pressure depends on the content and composition of the inputted waste.

As the composition of the waste is varying, i.e. it is a mixture of different type plastic wastes in different proportions, the melting point of the composite material inputted can not be determined. The basic idea is that, as a result of the technical process, the HBD (high bulk density) of the plastic waste should be increased to at least 0.5 kg/dm³ volume density. The temperature of the heat transferring surface is between 240°C and 300°C, preferably between 250°C and 280°C, most preferably it is 270°C.

It is not essential for the process that all the materials reach their melting temperature, the goal is that the cubic content of the composite waste should be significantly reduced, and the material thus obtained could be smoothly transferred to the next step. It can be judged by ocular inspection, based on practical experience.

The temperature of the material melted by the pressing and heating is between 130°C and 290°C, preferably it is 240°C. The material is transferred to the internal mixing machine at this temperature.

The material pressed out from the recovering machine is partly or entirely melted. This material is not completely homogeneous, and it may segregate, disintegrate after cooling down just like the matrix materials obtained by the prior art methods. Therefore its only the next obligatory step of the processing technology that ensures the production of the matrix material according to the invention. This step is the internal mixing in an appropriate machine, which, combined with the previous step, radically changes the technology of recycling plastic wastes.

The internal mixing machine applied in the method according to the invention mixes the material and exposes it to shear and compression stress in a way that the material is rearranged at the molecular level, some old molecular links are broken, while new molecular links are established between the different materials. The material leaving the previous step, i.e. the recovering process, which is not perfectly recovered, gets directly in to the internal mixing machine. This machine is an intermittent-operation machine that homogenises the material by adding heat, and ensures perfect extraction of the melted material from the machine at the end of the process.

It is important that the temperature in the internal mixing machine must not exceed the temperature that may lead to deterioration of the material. This is determined experimentally by watching the temperature and the consistence of the material.

The material obtained at the end of this process is already a matrix product according to the invention in its melted form, which also acts as a basis of the next technological step in which filling materials are added to obtain composite materials.

From the mixing machine the melted matrix material gets into the making-up machine, the tool of which can be a pressing machine, an injection mould, a transfer moulding machine, a calender or an extruder. The pressed matrix material can be a product in itself, and it can also act as a base material of composite materials obtained by adding filling materials to it.

In a typical example the melted material gets into a closed press which is designed to have the form of the final product, and the product cools down and obtains its final form in it. In order to avoid deformation and piping, the pressure must be maintained until the end of the cooling process.

The thus obtained matrix material that has gone through the technological steps of recovering, mixing and hot-pressing in the course of processing, is a chemically stable material of special physical properties, it is compression resistant and has high tear resistance, and it can be manually worked or machined. Its density is preferably between 0.6 - 1.3 g/cm³, however, it depends on the composition of the waste. The material is UV resistant because of the included contamination. This material is resistant to intemperate weather without significant modification in its properties.

This matrix material can be considered as a final product that can be processed, however, its major application area is that it acts as a base material for preparing composite materials applicable in diverse areas. The composite material is produced from the matrix material according to the invention by adding filling materials. The filling material can be added in the course of the internal mixing, the final step of producing the matrix material. In this case the step of pressing and cooling the matrix material without filling material is missing, and it is the composite material with the filling material that is pressed and cooled. In principle and also in practice it is also possible that the base material of the composite material is prefabricated matrix material block, however, in this case it must be melted before adding the filling material, and the filling material can be added to this melted matrix material. However, this requires significant further heating, causing extra expenses that is unacceptable with this cheap product.

As regards the final products of the method, we differentiate between the pure material (free of filling materials), which is referred to as matrix material so as to make a distinction, and the material containing filling material, which is obtained from the pure matrix material by adding filling materials, this is referred to as composite material.

Nearly any kind of filling material can be used for the production of the composite material that is both physically and chemically compatible with the matrix material. The only requirement in connection with the resulting composite material is that it must not be harmful to the environment.

We give some examples of filling materials, the list is not intended to be complete, and without restricting our invention to them:
- organic materials, primarily agricultural and manufacturing industrial materials, such as paper wastes and leather wastes (except of those treated with chromium),
- inorganic industrial wastes, such as tyre granulate, cord fibres originating from it, steel rim wastes mixed with rubber, scrap glass (even if coloured), and especially thermosetting plastics, wastes of printed circuits and electronic equipment that can not be used elsewhere,
- mineral materials such as earth, brick dust, pebbles, crushed rocks, granite, limestone, marble, andesite, but especially brick dust.

Looking at the list of filling materials, one can see the dual approach that it is not the only important point that the composite material should be technologically suitable, but also that further harmful materials from the industrial and communal waste should be eliminated and transformed into valuable product in the course of the processing.

The matrix, that is, the product with no filling materials, can be widely used in itself as well. We provide a non complete list of the possible areas of application. It can be used as wood substitute base material, e.g. as base material of shutterings, temporary fences, timbering, boards in construction industry, base material of parking materials such as benches, fences or props, hydraulic engineering and road-building materials. Base material of water-resistant floors, coatings of heat and electrical insulations, protection of dams against rodents, flood control sheets and rods. In general it can be stated that this material can be widely used to substitute for wood, protecting forests, using wastes for valuable purposes.

The composite materials with the filling materials can be used essentially in the same areas. The filling materials modify the properties of the original matrix material. The filling material to be used depends on the actual application, and it is to be determined experimentally for the given application.

In the above, we have presented the methods and the steps of the methods in detail, and we have characterized the materials obtained by the method. In what follows, we present some special embodiments as examples, however, these embodiments are presented for the purpose of demonstration only, they shall by no means restrict the scope of the present invention.

**Example 1:** Industrial waste originated from a plant, containing 55 % polyethylene, 25 % polypropylene, 10 % polypropylene cord and 10 % inorganic waste is inputted into the recovering machine, the inputted material is heated and pressed by 2.4 x 10⁷ Pa (240 kg/cm²), and the material melted at 240°C is transferred into the internal mixing machine. The matrix end product is obtained in the internal mixing machine where it is heated to 250°C. This matrix end product is extracted from the mixing machine, and the material of 220 - 240°C is placed into a press providing the final form, where the material is cooled down under pressure in the closed press, and it obtains its final form.

**Example 2:** The method is similar to the one presented in example 1, but the temperature in the recovering machine is 160°C and the composition of the base material is 55 % polyethylene packaging material, 5 % polypropylene, 10 % paper, 5 % polyethylene bottle, 5 % inorganic waste and 5 % other organic waste. That is, the melting point of the plastic content of the waste is lower.

**Example 3:** The method is similar to the one presented in example 1, but the pressure applied in the recovering machine is 0.5 x 10⁷ Pa (50 kg/cm²), and the composition of the base material is 25 % polyalkylene shrink-wrapping, 15 % polyethylene, 10 % PVC cover waste and 50 % big-bag sack polypropylene. That is, the melting point of the plastic content of the waste is lower.

**Example 4:** The method is similar to any of the examples 1-3, but we add miscellaneous agricultural waste as filling material in an amount corresponding to 25 % of the mass of the melted material in the internal mixing machine. The process is otherwise similar to the one presented in example 1.

**Example 5:** The mass composed in the internal mixing machine contains 15 % polypropylene strips, 20 % polyamide, 10 % polyalkylene shrink-wrapping and 50 % rubber scrapings or granulate as filling material.

**Example 6:** The mass composed in the internal mixing machine contains 3 % polypropylene, 2 % polyamide, 5 % PVC and 7 % polyethylene as matrix material, and 83 % rubber scrapings as filling material. This material can preferably be used for manufacturing rubber bricks.

**Example 7:** The mass composed in the internal mixing machine contains 15 % polyethylene, 15 % polypropylene, 2 % PVC and 8 % polyamide as matrix material, and 60 % crushed pebbles or breakstone as filling material.

**Example 8:** Sheets of 1 m² size and 20 mm thickness are produced from the matrix mass product obtained in any of examples 1- 3 with suitable shaping device.

**Example 9:** Flower-holder boxes of 500 x 200 mm size and 10 mm wall thickness are produced from the plastic matrix mass product obtained in any of examples 1-3 with suitable shaping device.

**Example 10:** Sheets of 1 m² size and 20 mm thickness are produced from the plastic composite material containing filling materials obtained in example 4 with suitable shaping device.

**Example 11:** Flower-holder boxes of 500 x 200 mm size and 5 mm wall thickness are produced from the plastic matrix mass product obtained in example 2 with suitable shaping device.

**Example 12**: Euro-pallets are produced by the method according to example 1, where the matrix material contains 15 % polyethylene, 20 % polypropylene, 5 % PVC and 10 % polystyrene, and the filling material is 50 % miscellaneous agricultural waste.

**Example 13:** The method according to any of examples 1-3, where 50 % brick dust is added to the matrix material as filling material.

**Example 14**: Border-stones with rounded edges used at playgrounds are produced from the composite material according to example 6.

It is a further advantage of the final product that it can be welded with its own material or the matrix material. It facilitates manufacturing and application of further products.

## Claims

1. Method for producing matrix material from thermoplastic waste originating from communal and industrial rubbish with melting of the said waste and transferring the melted plastic material to a homogenizing machine and optionally with making-up of the melted material, **characterized in that** the communal and industrial rubbish is inputted to a recovery machine equipped with heat transfer surfaces without selection, primary cleaning, chopping or shredding, impurely and in dry condition, where the plastic content of the rubbish mostly becomes a largely melted, nearly homogenous mixture by the help of the simultaneous effect of the pressure and the heat transmitted to the material where the said pressure is between 0,5.10⁷ Pa and 2,5.10⁷ Pa and the heating temperature is between 200°C and 280°C, and the largely melted mixture is transferred into a heated internal mixing machine between 200°C and 260°C without extrusion where complete melting and homogenization is carried out by the help of intensive mixing and heat transmission, and from the matrix material obtained optionally pressed material can be formed.

2. The method according to claim 1 **characterized in that** the dry waste is inputted to the recovery machine between 20°C and 50°C.

3. The method according to claim 1 or claim 2 **characterized in that** 1,2 - 1,6.10⁷ Pa pressure is used in the recovery machine.

4. The method according to any of claim 1-3 **characterized in that** the temperature used in the recovery machine and transmitted by beat transfer surfaces is between 240°C and 280°C.

5. The method according to any of claims 1-4 **characterized in that** the largely melted material leaving the recovery machine is inputted into the internal mixing machine between 250°C and 270°C.

6. The method according to any of claims 1-5 **characterized in that** a pressed product is formed from the melted matrix material originated in the internal mixing machine by the use of heat and pressure.

7. Method for producing composite material from the matrix material produced according to any of claims 1-6 with suitable filling material **characterized in that** the filling material is added to the melted matrix material, and the composite material final product is obtained by mixing and heating it, and, if required, this final product is formed by pressing to achieve a moulded product of the required shape.

8. The method according to claim 7 **characterized in that** the moulded product is cooled in the tool under pressure.

9. The method according to claim 7 or 8 **characterized in that** organic material is inputted as filling material.

10. The method according to any of claim 7-9 **characterized in that** agricultural and manufacturing industrial organic material is inputted as organic filling material including leather wastes.

11. The method according to claim 7 or 8 **characterized in that** inorganic material is inputted as filling material.

12. The method according to any of 7, 8 and 11 **characterized in that** car tyre granulate including cord fibres originating from it, wastes of steel rims treated with rubber or glass- and thermosetting plastic scrapings are inputted as inorganic industrial waste filling material and earth, brick dust, pebbles, crushed rocks, granite, limestone or andesite are inputted as mineral filling material.

13. Composite material produced from matrix material according to claim 7 and from 10 - 95% unclean inorganic waste as filling material including earth, metal, and crushed mineral material first of all crushed brick, stone, granite, limestone, marbles and andesite.

## Patentansprüche

1. Verfahren zur Verarbeitung von aus kommunalem und industriellem thermoplastischen Müll stammendem Kunststoffabfall zum Erhalt von Matrixmaterial durch Schmelzen des oben genannten Abfalls in einer Aufschlussmaschine, und durch das Weiterleiten des geschmolzenen Kunststoffs in eine Homogenisierungsanlage, dann bei Bedarf Aufbereitung des erhaltenen Schmelzguts, **dadurch gekennzeichnet, dass** der kommunale und der industrielle Müll unsortiert, ohne Vorreinigung und Zerkleinerung, kontaminiert, trocken in die mit Wärmeübergangsflächen versehene Aufschlussmaschine kommt, wo der Kunststoffgehalt des Abfalls mit Hilfe der Gesamtwirkung des Pressendrucks der Aufschlussmaschine und der in das Material übertragenen Wärme größtenteils schmilzt und beinahe homogen wird, wobei der genannte Pressendruck einen Wert zwischen 0,5 x 10⁷ Pa und 2,4 x 10⁷ Pa, und die genannte Temperatur einen Wert zwischen 200°C und 280°C beträgt, und der größtenteils geschmolzene Kunststoff ohne Strangpressen in den auf eine Temperatur zwischen 200°C und 260°C geheizten Innenmischer kommt, wo das vollständige Schmelzen und die Homogenisierung bei intensiver Mischung und Wärmezufuhr erfolgt, und aus dem entstandenen Matrixmaterial bei Bedarf ein Pressprodukt hergestellt werden kann.

2. Das Verfahren gemäß Patentanspruch 1 , **dadurch gekennzeichnet, dass** der genannte trockene Abfall bei einer Temperatur von 50°C in die Aufschlussmaschine kommt.

3. Das Verfahren gemäß Patentanspruch 1, **dadurch gekennzeichnet, dass** in der Aufschlussmaschine ein Druck von 1,2 - 1,6 x 10⁷ Pa angewendet wird.

4. Das Verfahren gemäß Patentanspruch 1, **dadurch gekennzeichnet, dass** die in der Aufschlussmaschine angewendete, durch die Wärmeübergangsflächen übertragene Temperatur 240 - 280°C beträgt.

5. Das Verfahren gemäß Patentanspruch 1, **dadurch gekennzeichnet, dass** das die Aufschlussmaschine verlassende, größtenteils geschmolzene Material in den Innenmischer mit einer Temperatur von 250 - 270°C kommt.

6. Das Verfahren gemäß Patentanspruch 1, **dadurch gekennzeichnet, dass** aus dem in dem Innenmischer entstandenen geschmolzenen Matrixmaterial mit Hilfe von Kühlung und Druck ein Pressprodukt hergestellt wird.

7. Verfahren zur Herstellung von Kompositmaterialien aus dem nach einem der Patentansprüche Nr. 1 - 6 hergestellten Matrixmaterial mit dem entsprechenden Füllstoff, **dadurch gekennzeichnet, dass** der Füllstoff dem geschmolzenen Matrixmaterial zugesetzt wird, und das Komposit-Endprodukt durch dessen Mischung und Erwärmung gewonnen wird. Dieses Endprodukt wird notfalls durch Pressen ausgebildet, damit das Gussmaterial in der erwünschten Größe erhalten wird.

8. Das Verfahren gemäß Patentanspruch 7, **dadurch gekennzeichnet, dass** das geschmolzene Produkt in dem Werkzeug unter Druck abgekühlt wird.

9. Das Verfahren gemäß Patentanspruch 7, **dadurch gekennzeichnet, dass** organischer Stoff als Füllstoff zugegeben wird.

10. Das Verfahren gemäß Patentanspruch 9, **dadurch gekennzeichnet, dass** als organischer Stoff aus der Landwirtschaft und aus der bearbeitenden Industrie stammendes Material zugegeben wird, Abfallleder inbegriffen.

11. Das Verfahren gemäß Patentanspruch 7, **dadurch gekennzeichnet, dass** anorganischer Stoff als Füllstoff zugegeben wird.

12. Das Verfahren gemäß Patentanspruch 11, **dadurch gekennzeichnet, dass** als anorganischer Industrieabfall Autogummi-Granulat, daraus stammende Kordfasern, mit Gummi behandelter Stahlreifen-Abfall, Schrott aus Glas oder thermohärtendem Kunststoff, und als Mineralstoff Boden, Ziegelbruch, Kies, Schotter, Granit, Kalkstein und Marmor zugegeben werden.

13. Kompositmaterial, das aus dem gemäß Patentanspruch 7 hergestellten Matrixmaterial und aus 10 - 95% ungereinigtem anorganischem Abfall wie Boden, Metall und geschroteten Mineralstoffen, in erster Linie aus Ziegelbruch, Stein, Granit, Kalkstein und Andesit besteht.

## Revendications

1. Procédé de préparation d'une matrice à partir de déchets synthétiques thermoplastiques issus d'ordures ménagères et industrielles, au moyen de la fonte desdits déchets dans un équipement de récupération, du transfer de la plastique fondue dans un dispositif d'homogénéisation et, en cas voulu, au moyen du traitement de la matière fondue, **caractérisé en ce que** les ordures ménagères et industrielles passent polluées et sèches, sans aucun tri, pré-nettoyage ou broyage, dans l'équipement de récupération muni de surfaces de transmission de chaleur où, sous l'effet commun de la pression de compression de l'appareil de récupération et de la chaleur communiquée au matériau, le contenu en plastique des déchets fond en grande partie pour devenir presque homogène, ladite pression de compression se situant entre 0,5.10⁷ Pa et 2,4.10⁷ Pa, et ladite température se situant entre 200°C et 280°C, et cette matière synthétique fondue en grande partie passe sans extrusion dans le mélangeur intérieur réchauffé entre 200°C et 260°C, où la fonte et l'homogénéisation intégrales se réalisent à l'aide d'un malaxage et d'une transmission de chaleur intensifs, la matrice obtenue pouvant être transformée, en cas voulu, en produit comprimé.

2. Procédé selon la revendication 1, **caractérisé en ce que** ledit déchet sec passe dans l'équipement de récupération à une température de 20 à 50°C.

3. Procédé selon la revendication 1, **caractérisé en ce que** la pression utilisée dans l'équipement de récupération est entre 1,2 et 1,6.10⁷ Pa.

4. Procédé selon la revendication 1, **caractérisé en ce que** la température appliquée dans l'équipement de récupération, et communiquée par les surfaces de transmission de chaleur se situe entre 240 et 280°C.

5. Procédé selon la revendication 1, **caractérisé en ce que** ledit déchet sec passe dans l'équipement de récupération à une température de 250 à 50°C.

6. Procédé selon la revendication 1, **caractérisé en ce que** la matrice fondue, obtenue dans le mélangeur intérieur, est transformée, grâce à l'application du refroidissement et de la compression, en produit comprimé.

7. Procédé de préparation de matières composites, avec un agrégat approprié, à partir d'une matrice fabriquée selon l'une quelconque des revendications 1 à 6, **caractérisé en ce que** l'agrégat est ajouté à la matrice fondue, et que le produit final composite est constitué par leur malaxage et réchauffage, ce produit final étant réalisé, en cas de besoin, par une compression servant d'acquérir les dimensions souhaitées du matériau fondu.

8. Procédé selon la revendication 7, **caractérisé en ce que** le produit fondu est refroidi sous pression, dans l'outil-même.

9. Procédé selon la revendication 7, **caractérisé en ce que** l'agrégat utilisé est une matière organique.

10. Procédé selon la revendication 9, **caractérisé en ce que** la matière organique utilisée est une matière organique issue d'agriculture ou d'industrie de transformation, et comprend les déchets de cuir.

11. Procédé selon la revendication 7, **caractérisé en ce que** l'agrégat utilisé est une matière inorganique.

12. Procédé selon la revendication 11, **caractérisé en ce que** le déchet industriel inorganique utilisé se compose d'un granulé de pneumatiques de véhicule, de fils qui en proviennent, de déchets de jantes en acier traité au caoutchouc, d'une mouture de verres ou de plastique thermodurcissable et que les minéraux appliqués se composent de terre, de débris de briques, de cailloux, de gravier, de granit, de calcaire ou de marbre.

13. Matière composite se composant d'une matrice préparée selon la revendication 7 et, dans une proportion de 10 à 95%, d'un déchet inorganique brut comme la terre, le métal et les minéraux concassés, plus particulièrement les débris de briques, les cailloux, le granit, le marbre et l'andésite.
